# EUROPEAN PATENT SPECIFICATION

(11) **EP 3 809 221 B1**
(45) Date of publication and mention of the grant of the patent: **17.09.2025**
(21) Application number: 19204091.3
(22) Date of filing: 18.10.2019
(51) Int. Cl.: G05B 23/02

(54) **DATA COUPLING BETWEEN AN INDUSTRIAL CONTROLLER UNIT AND A VISUALIZATION UNIT**
DATENKOPPLUNG ZWISCHEN EINER INDUSTRIELLEN STEUERVORRICHTUNGSEINHEIT UND EINER VISUALISIERUNGSEINHEIT
COUPLAGE DE DONNÉES ENTRE UNE UNITÉ DE COMMANDE INDUSTRIELLE ET UNE UNITÉ DE VISUALISATION

(43) Date of publication of application: 21.04.2021
(73) Proprietor: CODESYS Holding GmbH, 87439 Kempten (DE)
(72) Inventor: PFOB, Michael, 87477 Sulzberg-Moosbach (DE); AMBROS, Stefan, 87439 Kempten (DE)
(74) Representative: Lucke, Andreas

(56) References cited:
- EP-A1- 1 280 027
- EP-A1- 3 506 089
- US-A1- 2004 205 185
- US-A1- 2005 096 872
- US-A1- 2011 258 568

## Description

### Technical Field

The disclosure relates to the field of industrial control, and in particular to techniques for data coupling between an industrial controller unit and a visualization unit for the industrial controller unit.

### Background

Industrial controller units are ubiquitous in modern manufacturing and process control, and are often employed to control manufacturing equipment, chemical plants or other machinery. Typically, an industrial controller unit may run an industrial control program, such as a compiled industrial control program or ladder logic instructions, and may send control instructions to the controlled machinery in accordance with the industrial control program via an industrial control network. The industrial controller unit may also receive data from the controlled machinery via the industrial control network, such as parameters relating to process variables or measurement data pertaining to the machinery, which may be processed in the industrial controller unit and may serve as feedback for the industrial control program.

In some practically relevant applications, a user may want to have the possibility of interfacing with the industrial controller unit by means of a visualization unit. The visualization unit may comprise a plurality of visualization elements, which may be adapted to display data pertaining to the machinery that the industrial controller unit controls on a display device or on a graphical user interface. The visualization unit may also be adapted to receive instructions from the user, such as via the graphical user interface, and to forward them to the industrial controller unit. The communication link over which the industrial controller unit may communicate with the visualization unit may comprise a wired or wireless connection, for instance a dedicated industrial control network or a public network, such as the Internet.

Conventionally, elements of the visualization may be linked to scalar variables on the industrial controller unit by means of respective symbolic variable names. The visualization elements may poll the industrial controller unit cyclically to obtain updates of the scalar variables required for the graphical representation. An exemplary industrial control and monitoring method is described in US 7,092,771 B2.

However, the symbolic variable lists need to be managed and updated manually to keep the visualization up-to-date.

US 2005/0096872 A1 is concerned with smart objects that integrate both a visualization aspect and a simulation aspect. These smart objects are located on a workstation and may be associated with any desired process entity, such as physical devices like pumps, tanks, valves, etc., or logical entities such as process areas, measurements or actuators, control strategies, etc.

US 2004/0205185 A1 relates to techniques for dynamically displaying industrial control data in a browser of a client computer. Real-world pressure measurements acquired by means of a pressure transducer may be converted into corresponding data signals and communicated to a programmable logic controller, which may periodically retrieve updated real-world data from the pressure transducer in order to update data previously stored in the memory of the programmable logic controller. The data transfer may be triggered by means of specialized tags incorporated into a web page file. Upon receiving a request from the client computer, a host computer transmits the webpage file to the client computer for display in a computer monitor of the client computer. If the host computer finds a webpage file containing the specialized tags, the host computer communicates with the programmable logic controller and retrieves the most currently updated real-world data that is stored in the nonvolatile memory of the programmable logic controller.

Similarly, EP 3 506 089 A1 relates to access requests to an industrial controller through a web browser on a user interface.

Techniques for generating screen data by inquiring a programmable logic controller about a current status of a device are disclosed in EP 1 280 027 A1.

US 2011/0258568 A1 discloses methods that allow operators to visualize and control a regulatory, advanced process control, optimization or other control techniques in the process control system by means of a visualization graphical user interface.

What is required are more efficient techniques for communicating between an industrial controller unit and a visualization unit.

### Overview

This objective is achieved with a visualization unit according to independent claim 1, an industrial controller unit according to independent claim 5, and the method for data coupling in an industrial control environment according to independent claims 10 and 13, respectively.

In a first aspect according to the invention, a visualisation unit is defined according to claim 1.

By providing first and second proxy elements in the industrial controller unit that correspond to or are associated with the respective first and second visualization elements, and establishing corresponding first and second data couplings between the first and second visualization elements and the respective first and second proxy elements, a more direct and more efficient coupling between the industrial controller unit and the visualization unit can be achieved, which allows for shortened monitoring intervals. Moreover, the techniques of the disclosure permit swift changes between the graphical representation of different visualization elements. The complexity of setting up and maintaining the visualization is likewise reduced.

A visualization unit, in the sense of the present disclosure, may refer to any software and/or hardware unit adapted to display to a user, on a display unit or any other output device, a plurality of values pertaining to an operation of an industrial control program running on an industrial controller unit.

The visualization unit may be located remotely from the visualization unit, but may be coupled to the visualization unit by means of a communication network, such as a wired or wireless data connection.

In some examples, the communication network may comprise a dedicated industrial controller network, such as in a factory environment.

In other examples, the communication network may comprise a public network, such as the Internet.

According to an embodiment, the first data coupling is a direct data coupling between the first visualization element and the first proxy element, in particular a point-to-point coupling between the first visualization element and the first proxy element.

Due to the direct first data coupling, the first visualization element may receive the first value of the first variable directly from the corresponding first proxy element. The first proxy element may send the first value directly to the corresponding first visualization element.

Similarly, the second data coupling may be a direct data coupling between the second visualization element and the second proxy element, in particular a point-to-point coupling between the second visualization element and the second proxy element.

Due to the direct second data coupling, the second visualization element may receive the second value of the second variable directly from the corresponding second proxy element. The second proxy element may send the second value directly to the corresponding second visualization element.

According to an embodiment, the first value and/or the second value does not only comprise symbolic information pertaining to the first variable and/or the second variable, respectively.

In particular, the first value and/or the second value does not comprise any symbolic information pertaining to the first variable and/or the second variable, respectively.

Rather, the corresponding data pertaining to the first value of the first variable and/or the second value of the second variable may be provided as address information directly by the first proxy element and/or second proxy element, respectively.

As a result, the usage and/or update of symbolic variable lists may be reduced, or may even become superfluous. The data coupling is always up-to-date. In case of a page change in the visualization unit, the respective visualization elements are provided with the corresponding data directly via the corresponding proxy elements. Hence, the visualization unit can be managed and updated more efficiently.

In the context of the present disclosure, a visualization element may denote a function block adapted to visualize a pre-determined set of parameters or variables on a user display of the visualization unit. In addition, the visualization element may optionally be adapted to receive user input from a user, such as via the user display or a separate interface, and to forward data pertaining to the user input to the industrial controller unit.

In some embodiments, the visualization element may be realised in software or firmware. In some embodiments, the visualization element may be realised in hardware. In some embodiments, the visualization element may be realised partly in software/firmware, and partly in hardware.

According to an embodiment, the first visualization element comprises a first widget, and/or the second visualization element comprises a second widget.

In the context of the present disclosure, a proxy element may be understood to relate to a representation or agent of a corresponding visualization element in the industrial controller unit.

The proxy element may be adapted to implement at least part of a logic of the visualization of the corresponding visualization element on the industrial controller unit.

According to an embodiment, the first proxy element and/or the second proxy element may be realised in software or firmware. In some embodiments, the first proxy element and/or the second proxy element may be realised in hardware. In some embodiments, the first proxy element and/or the second proxy element may be realised partly in software/firmware, and partly in hardware.

For instance, a proxy element may refer to an instance of a function block or class that represents the respective visualization element and allows a direct access to the respective variables pertaining to the industrial control program.

In some examples, the proxy element may be a proxy widget.

According to an embodiment, the first data coupling and/or the second data coupling comprises a command list and/or an event list.

According to an embodiment, the first visualization element is associated with the first proxy element by means of a first hierarchical ID stack, and/or the second visualization element is associated with the second proxy element by means of a second hierarchical ID stack.

A user interface, in the sense of the present disclosure, may denote any element adapted to output or graphically display values pertaining to an operation of the industrial controller unit to a user.

In some embodiments, the user interface may be implemented in software or firmware. In some embodiments, the user interface may be implemented in hardware. In some embodiments, the user interface may be implemented partly in software/firmware, and partly in hardware.

According to an embodiment, the user interface is adapted to receive user input data pertaining to the first variable and/or the second variable, and to provide the user input data to the first proxy element and/or to the second proxy element, respectively.

In particular, the user interface may be adapted to provide the user input data to the first proxy element and/or to the second proxy element via the corresponding first visualization element and/or second visualization element and the corresponding first data coupling and/or the second data coupling, respectively.

For instance, a user may change a parameter range of the visualization, such as by moving a meter or slider on the graphical display of the user interface. This change can be communicated to the respective first visualization element and/or second visualization element via the corresponding first and second data couplings, so as to allow the respective first proxy element and/or a second proxy element to provide corresponding first values and/or second values to the visualization unit that comply with the new parameter range.

The techniques of the disclosure thereby allow an efficient and straightforward reconfiguration of first proxy element and/or a second proxy element, respectively.

According to an embodiment, the visualization unit, in particular the first visualization element, is adapted to query the first proxy element for the first value.

In some examples, the first visualization element is adapted to query the first proxy element for the first value at regular time intervals, and/or at a predetermined event, in particular at a predetermined event within a task cycle.

Similarly, the visualization unit, in particular the second visualization unit, may be adapted to query the second proxy element for the second value.

In some examples, the second visualization element is adapted to query the second proxy element for the second value at regular time intervals, and/or at a predetermined event, in particular at a predetermined event within a task cycle.

The techniques of the present disclosure have been described above from the perspective of a visualization unit. In another aspect, the disclosure is characterised from the complementary perspective of an industrial controller unit, such as an industrial controller unit connected to a visualization unit via a communication network.

In a second aspect according to the invention an industrial controller unit is defined according to claim 5.

According to an embodiment, the first data coupling may be a direct data coupling between the first visualization element and the first proxy element.

Similarly, the second data coupling may be a direct data coupling between the second visualization element and the second proxy element.

According to an embodiment, the first value and/or the second value does not only comprise symbolic information pertaining to the first variable and/or the second variable, respectively.

In particular, the first value and/or the second value does not comprise any symbolic information pertaining to the first variable and/or the second variable, respectively.

An industrial controller unit, in the sense of the present disclosure, may denote any unit that is adapted to run an industrial control program, such as in the form of a compiled industrial control program or ladder logic instructions, to control operation of an industrial process or machinery.

An industrial control program, in the sense of the present disclosure, may refer to any software code or firmware code that is adapted to control operation of a machinery or industrial process.

According to an embodiment, the industrial controller unit further comprises a memory element adapted to store the first variable and/or the second variable, wherein the first proxy element is adapted to query the first variable from the memory element and/or wherein the second proxy element is adapted to query the second variable from the memory element, in particular in accordance with a query task.

According to an embodiment, the query task is a task of the industrial control program.

Alternatively, the query task may be a task different from a task of the industrial control program, in particular a task with a lower priority than the task of the industrial control program.

By relegating the query to a separate task with a lower priority, the visualization may be prevented from interfering substantially with the running industrial control program.

According to an embodiment, the first proxy element is adapted to check whether the first value of the first variable has changed in the memory element, and to provide the first value of the first visualization element only if the first value has changed.

Similarly, the second proxy element may be adapted to check whether the second value of the second variable has changed in the memory element, and to provide the second value to the second visualization element only if the second value has changed.

By providing the respective first and second values only upon detection of a value change, a particularly efficient visualization may be achieved, with minimal data volume and minimal interference with the running industrial control program.

According to an embodiment, the first proxy element is adapted to provide the first value to the first visualization element in response to a query received from the visualization unit, in particular from the first visualization element.

Similarly, the second proxy element may be adapted to provide the second value to the second visualization element in response to a query received from the visualization unit, in particular from the second visualization element.

According to an embodiment, the first proxy element is adapted to receive user input data from the visualization unit, in particular from the first visualization element, and to modify the first variable in accordance with the user input data.

For instance, a modification of the first variable may comprise a change of a parameter range of the first variable, in accordance with a user selection.

Similarly, the second proxy element may be adapted to receive user input data from the visualization unit, in particular from the second visualization element, and to modify the second variable in accordance with the user input data.

In a third aspect, the disclosure relates to a system comprising a visualization unit with some or all of the features described above, and an industrial controller unit with some or all of the features described above. The visualization unit and the industrial controller unit may be coupled by means of a communication network (such as a data connection link), as described above.

A system according to the third aspect comprises an industrial controller unit according to the wording of claim 5.

The industrial controller unit may comprise a first proxy element and a second proxy element.

The user interface may be adapted to display a representation of the first value and/or the second value.

According to an embodiment, the first visualization element, the second visualization element, the first proxy element and/or the second proxy element may be realised at least in part in software or firmware.

According to an embodiment, the first visualization element, the second visualization element, the first proxy element and the second proxy element are jointly compiled.

In particular, the first visualization element, the second visualization element, the first proxy element and the second proxy element may be jointly compiled in a compiler unit of the industrial control environment, such as in the compiler unit provided in a programming environment of the industrial control environment.

In the first aspect, the disclosure also relates to a method for data coupling according to the wording of claim 10.

According to an embodiment, the method further comprises the steps of receiving user input data pertaining to the first variable and/or the second variable; and providing the user input data to the first proxy element and/or the second proxy element, respectively.

According to an embodiment, the method further comprises the steps of querying the first proxy element for the first value, in particular by means of the first visualization element; and/or querying the second proxy element for the second value, in particular by means of the second visualization element.

In the second aspect, the disclosure additionally relates to a method for data coupling according to the wording of claim 13.

According to an embodiment, the method further comprises querying, by the first proxy element, the first variable from a memory element of the industrial controller unit, in particular in accordance with a query task.

Similarly, the method may comprise querying, by the second proxy element, the second variable from a memory element of the industrial controller unit, in particular in accordance with a query task.

According to an embodiment, the method may further comprise checking, the first proxy element, whether the first value of the first variable has changed in the memory element, and providing the first value to the first visualization element only if the first value has changed.

Similarly, the method may comprise checking, by the second proxy element, whether the second value of the second variable has changed in the memory element, and providing the second value to the second visualization element only if the second value has changed.

According to an embodiment, the method may further comprise providing, by the first proxy element, the first value to the first visualization element in response to a query received from the first visualization element.

Similarly, the method may comprise providing, by the second proxy element, the second value to the second visualization element in response to a query received from the second visualization element.

According to an embodiment, the method comprises receiving, by the first proxy element, user input data from the first visualization element, and modifying the first variable in accordance with the user input data.

Similarly, the method may comprise receiving, by the second proxy element, user input data from the second visualization element, and modifying the second variable in accordance with the user input data.

In the third aspect, the disclosure further relates to a method for data coupling in an industrial control environment, the method comprising the following steps: associating a first visualization element with a corresponding first proxy element provided in an industrial controller unit, wherein the industrial controller unit is located remotely from the first visualization element in the industrial control environment and is adapted to run an industrial control program; associating a second visualization element with a corresponding second proxy element provided in the industrial controller unit, wherein the second visualization element is different from the first visualization element and wherein the second proxy element is different from the first proxy element; providing at least a first value of a first variable pertaining to the industrial control program from the first proxy element to the corresponding first visualization element via a first data coupling; receiving, by the first visualization element, the first value from the corresponding first proxy element via the first data coupling; providing at least a second value of a second variable pertaining to the industrial control program from the second proxy element to the corresponding second visualization element via a second data coupling; receiving by the second visualization element, the second value from the corresponding second proxy element via the second data coupling; and displaying a representation of the first value and/or the second value.

According to an embodiment, the first visualization element, the second visualization element, the first proxy element and/or the second proxy element are at least in part realised in software or firmware.

According to an embodiment, the method further comprises jointly compiling the first visualization element, the second visualization element, the first proxy element and the second proxy element.

According to an alternative embodiment, the method may comprise jointly compiling the first proxy element and the second proxy element, and associating the compiled first proxy element and second proxy element with the first visualization element and the second visualization element, respectively.

In a fourth aspect according to the invention, the disclosure relates to a computer program or a computer program product comprising computer-readable instructions, such that the instructions, when read on a computer, are adapted to implement a method with some or all of the steps described above.

The techniques of the present disclosure have been described above with reference to a first visualization element associated with a first proxy element, and a second visualization element associated with a second proxy element. However, the visualization unit may comprise any number of n visualization elements, n > 1, that are associated with a corresponding number of n proxy elements provided in the industrial controller unit.

Conversely, the industrial controller unit may comprise any number of n proxy elements, n > 1, that are associated with a corresponding number of n visualization elements provided in the visualization unit.

In general, the correspondence between the n visualization elements provided in the visualization unit and the n proxy elements provided in the industrial controller unit may be one-to-one.

Further, the techniques of the present disclosure have been described above with reference to a first value of a first variable and a second value of a second variable. In general, the respective first or second visualization element may be adapted to receive a plurality of first or second values, respectively, pertaining to a single or a plurality of first or second variables. The respective first or second visualization element may in particular be adapted to receive real, integer, or Boolean values, or structured data, such as data arrays, lists, data value pairs or tuples, or any other form of data.

Similarly, the respective first or second proxy element may be adapted to provide a plurality of first or second values, respectively, pertaining to a single or a plurality of first or second variables. In particular, the respective first or second proxy element may be adapted to provide real, integer, or Boolean values, or structured data, such as data arrays, lists, data value pairs or tuples, or any other form of data.

### Brief Description of the Figures

The features and numerous advantages of the techniques according to the present disclosure will become best apparent from a detailed description of embodiments with reference to the accompanying drawings, in which:
- Fig. 1: is a schematic illustration of an exemplary control environment in which the techniques of the present disclosure may be employed;
- Fig. 2: is a schematic illustration of a visualization unit according to an embodiment;
- Fig. 3: is a schematic illustration of an industrial controller unit according to an embodiment;
- Fig. 4: schematically illustrates the interplay between an application logic and a remote visualization according to an embodiment;
- Fig. 5: schematically illustrates a direct data coupling between an application logic and a remote visualization according to an embodiment;
- Fig. 6: is a schematic flow diagram of a method for data coupling in an industrial control environment from the perspective of a visualization unit, in accordance with an embodiment; and
- Fig. 7: is a schematic flow diagram of a method for data coupling in an industrial control environment from the perspective of an industrial controller unit, in accordance with an embodiment.

### Detailed Description of Embodiments

Examples of techniques for an improved data coupling between an industrial controller unit and a visualization unit will now be described with reference to an exemplary industrial control environment 10 that involves control of a conveyor belt system 12 by means of industrial control software. However, this example is merely for illustration, and in general the techniques according to the present disclosure may be employed for the control of any kind of industrial process, comprising but not limited to control of industrial machinery, robots, chemical fabrication processes, or light control applications.

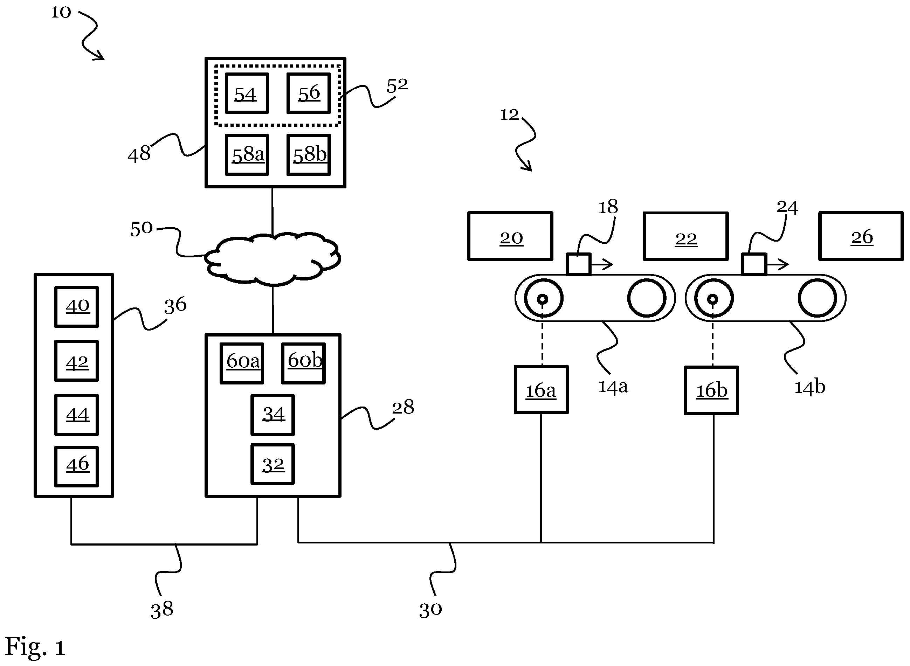

As illustrated in Fig. 1, the industrial control environment 10 comprises the conveyor belt system 12, which in turn comprise a first conveyor belt 14a driven by a first motor unit 16a and a second conveyor belt 14b driven by a second motor unit 16b. The first conveyor belt 14a may be adapted to transport goods 18 between a manufacturing station 20 and a packaging station 22, where the goods 18 are packaged. The second conveyor belt 14b may be adapted to transport the packaged goods 24 from the packaging station 22 to a labelling station 26, were the packaged goods 24 are labelled and prepared for shipping.

The industrial control environment 10 further comprises an industrial controller unit 28 that is connected to the first motor unit 16a and the second motor unit 16b by means of a control line 30, such as a wired or wireless connection. In other examples, the industrial controller unit 28 may be integrated into the controlled machinery, such as the conveyor belt system 12.

The industrial controller unit 28 may comprise a processing element 32, e.g. a CPU adapted to run an industrial control program, such as in the form of a compiled program for controlling the first motor unit 16a and the second motor unit 16b. For instance, the processing element 32 may provide instructions to the first motor unit 16a and to the second motor unit 16b via the control line 30, such as instructions for the first motor unit 16a to drive the first conveyor belt 14a at a first speed, and instructions for the second motor unit 16b to drive the second conveyor belt 14b at a second speed, which may be different from the first speed.

The industrial controller unit 28 may also receive sensor signals pertaining to an operation of the conveyor belt system 12 via the control line 30, and provide corresponding feedback to the processing element 32. For instance, such sensor signals may relate to sensors indicating a position or current speed of the conveyor belts 14a, 14b, or any other data relating to an operational state of the conveyor belt system 12.

As further illustrated in Fig. 1, the industrial controller unit 28 also comprises a memory element 34 connected to the processing element 32. In particular, the memory element 34 may be adapted to store programs, variables or data structures pertaining to an operation of the industrial controller unit 28. The memory element 34 may also store data relating to an operational state of the conveyor belt system 12, such as sensor data received from the conveyor belt system 12.

The industrial control environment 10 may further comprise a programming environment 36 that is connected to the industrial controller unit 28 via a network 38, such as a factory intranet or the Internet. For instance, the programming environment 36 may comprise a desktop PC or other computing device, and may be employed by a programmer to design and generate industrial control software for the industrial controller unit 28, for instance in the form of an industrial control program in a high-level programming language, such as C or C++ or IEC standard 61131.

The programming environment 36 may comprise a programming interface 40, such as a programming editor or graphical editor that allows a programmer to generate the industrial control program in the high-level programming language. The programming environment 36 may further comprise a programming memory unit 42 and a programming processor unit 44 that are connected to the industrial controller unit 28 via the network 38. The programming memory unit 42 may store functions, function blocks or variables that can be employed by the programmer when generating the industrial control program. The programming processor unit 44 may provide the processing resources to run the programming interface 40 and to generate the industrial control program.

In some examples, the programming environment 36 may additionally comprise a compiler unit 46 that is adapted to convert the industrial control program from the high-level programming language into a compiled industrial control program in machine code.

The compiled industrial control program may then be provided to the industrial controller unit 28 via the network 38, and may be stored in the memory unit 34 and may be run in the processing unit 32 to control operation of the conveyor belt system 12.

In other examples, the programming environment 36 provides the industrial control program to the industrial controller unit 28 via the network 38 in the high-level programming language, and the industrial controller unit 28 comprises a compiler unit (not shown) that compiles the high-level industrial control program into machine code.

As can be further taken from Fig. 1, the industrial control environment 10 additionally comprises a visualization unit 48 that is connected to the industrial controller unit 28 via a communication network 50. In some examples, the communication network 50 coincides with the network 38 that connects the industrial controller unit 28 to the programming environment 36, or with the control network 30 that connects the industrial controller unit 28 to the conveyor belt system 12. In other examples, the communication network 50 is a different network, such as a wired or wireless network. In some embodiments, the communication network 50 is a dedicated industrial control network or intranet. In other examples, the communication network 50 is a public network, such as the Internet.

The visualization unit 48 comprises a user interface 52 that may allow the user to access and interface with the industrial controller unit 28 via the communication network 50. For instance, the interface 52 may comprise a display device 54, which may allow to display parameters or variables pertaining to an operation of the industrial control program running on the industrial controller unit 28, such as in a graphical format. As an example, the industrial controller unit 28 may provide the visualization unit 48 with parameters from the memory element 34 that relate to a current speed of the first conveyor belt 14a and the second conveyor belt 14b, or to a current load of the first motor unit 16a or the second motor unit 16b. The visualization unit 48 may display these parameters on the display device 54, such as in the form of a dial or meter. This may allow a user to monitor an operation of the conveyor belt system, even when the user is at a different location.

In other examples, the visualization unit 48 may be adapted to display, on the display device 54, warning messages or instruction messages pertaining to an operation of the conveyor belt system 12, in accordance with data pertaining to an operational state of the conveyor belt system 12.

As can be further taken from Fig. 1, the user interface 52 may also comprise a user input device 56, which may allow a user to access the industrial controller unit 28 via the communication network 50, such as to modify parameters pertaining to an industrial control program running on the processing element 32, and hence adjust an operation of the conveyor belt system 12. For instance, the user input device 56 may allow the user to adjust, via a graphical slider element, a maximum permissible load of the first motor unit 16a and the second motor unit 16b, or a maximum permissible speed of the first conveyor belt 14a and the second conveyor belt 14b.

In some conventional applications, the visualization unit 48 may communicate with the industrial controller unit 28 by means of symbolic variable names, so that elements of the visualization are associated with scalar values on the industrial controller unit 28 by means of symbolic variable names. The visualization unit 48 may then cyclically poll the industrial controller unit 28, such as for parameters stored in the memory element 34, and display their respective values on the display device 54. In some examples, the industrial controller unit 28 may send the data to the visualization unit 48 in a graphical format, so to allow the display device 54 to directly display the information to the user. However, this may be time-consuming. Moreover, the symbolic variable lists may need to be administered and updated separately, which can again slow down the visualization, and may require significant reconfiguration when the user may want to change the display.

The techniques according to the present disclosure address these concerns with a direct data coupling between visualization elements on the visualization unit 48, and corresponding proxy elements on the industrial controller unit 28. The proxy elements may serve as representatives or agents of the visualization elements, and may allow the visualization elements to directly access the respective variables of the industrial control program running on the industrial controller unit 28. This data structure allows implementing part of the logic of the visualization on the industrial controller unit 28, which results in a swifter monitoring and update and a simplified and more efficient configuration.

In the example of Fig. 1, the visualization unit 48 comprises a first visualization element 58a and a second visualization element 58b. For instance, the first visualization element 58a may pertain to a monitoring of an operation of the first motor unit 16a, and the second visualization element 58b may pertain to a monitoring of an operation of the second motor unit 16b.

The industrial controller unit 28 comprises a corresponding first proxy element 60a, serving as a proxy, agent or representative of the first visualization element 58a in the industrial controller unit 28. The first proxy element 60a may be adapted to provide values pertaining to an operation of the first motor unit 16a, such as a current speed of the first conveyor belt 14a or a current load of the first motor unit 16a, to the first visualization element 58a, in the form of a direct data coupling via the communication network 50. The first visualization element 58a may display this information on the display device 54.

Similarly, the industrial controller unit 28 comprises a corresponding second proxy element 60a, which serves as a proxy, agent or representative of the second visualization element 58b in the industrial controller unit 28. The second proxy element 60b may be adapted to provide values pertaining to an operation of the second motor unit 16b, such as a current speed of the second conveyor belt 14b or a current load of the second motor unit 16b, to the second visualization element 58b, by means of a direct data coupling via the communication network 50. The second visualization element 58b may display this information on the display device 54.

The first data coupling between the first visualization element 58a and the first proxy element 60a may be established via the communication network 50. Similarly, the second data coupling between the second visualization element 58b and the second proxy element 60b may be established via the communication network 50.

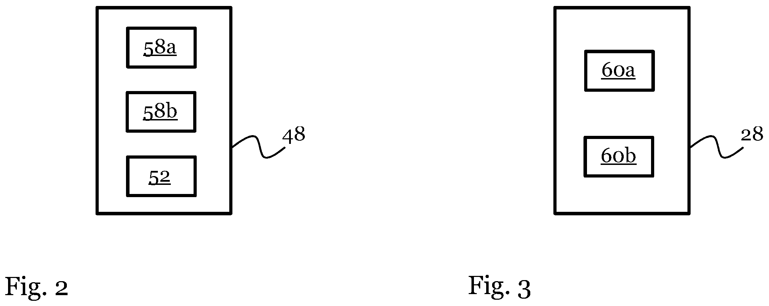

Fig. 2 schematically illustrates a visualization unit 48 according to an embodiment. The visualization unit 48 comprises a first visualization element 58a which is associated with a corresponding first proxy element 60a provided in an industrial controller unit 28, wherein the industrial controller unit 28 is located remotely from the visualization unit 48 in the industrial control environment 10 and is adapted to run an industrial control program, such as on the processing element 32, for operation of the conveyor belt system 12.

The first visualization element 58a is adapted to receive at least a first value of a first variable pertaining to the industrial control program from the corresponding first proxy element 60a via a first data coupling.

As further illustrated in Fig. 2, the visualization element 48 additionally comprises a second visualization element 58b which is associated with the corresponding second proxy element 60b provided in the industrial controller unit 28, wherein the second visualization element 58b is different from the first visualization element 58a and wherein the second proxy element 60b is different from the first proxy element 60a.

The second visualization element 58b may be adapted to receive at least a second value of a second variable pertaining to the industrial control program from the corresponding second proxy element 60b via a second data coupling.

Moreover, the visualization unit 48 comprises the user interface 52 adapted to display a representation of the first value and/or the second value.

Fig. 3 is a schematic illustration of an industrial controller unit 28 according to an embodiment. The industrial controller unit 28 comprises a first proxy element 60a which is associated with a corresponding first visualization element 58a provided in a visualization unit 48, wherein the industrial controller unit 28 is located remotely from the visualization unit 48 in an industrial control environment 10 and is adapted to run an industrial control program.

The first proxy element 60a is adapted to provide at least a first value of a first variable pertaining to the industrial control program to the corresponding first visualization element 58a via a first data coupling.

As can be further taken from Fig. 3, the industrial controller unit 28 additionally comprises a second proxy element 60b which is associated with a corresponding second visualization element 58b provided in the visualization unit 48, wherein the second proxy element 60b is different from the first proxy element 60a and wherein the second visualization element 58b is different from the first visualization element 58a.

The second proxy element 60b may be adapted to provide at least a second value of the second variable pertaining to the industrial control program to the corresponding second visualization element 58b via a second data coupling.

The techniques have described above for the example of a visualization unit comprising two visualization elements 58a, 58b, and an industrial controller unit 28 comprising two corresponding proxy elements 60a, 60b. However, depending on the industrial control environment 10 and the controlled process, the visualization unit 48 may generally comprise any number of visualization elements, and the industrial controller unit 28 may comprise a corresponding number of proxy elements.

For concreteness, techniques of the disclosure and exemplary applications will now be described in greater detail for a specific implementation based on function blocks of IEC technical standard 61131-3. However, the techniques of the disclosure are not so limited, and may likewise be employed in different industrial control environments employing different programming environments and different programming languages.

In accordance with the standard terminology, in the context of IEC 61131-3 an "IEC application", or shorthand "application" may refer to an industrial control program.

The standard IEC 61131-3 allows object-oriented programming. The object type "function block" may generally correspond to a class of an object-oriented programming language.

An instance of a function block may correspond to an instance of the class. Every instance may have independent data.

Just as other object-oriented programming languages, IEC 61131-3 provides "interfaces". An interface may consist of methods and properties.

"Control variables", or shorthand "variables", may refer to data of global variables, program variables or instances of function blocks. The values of these variables may relate to an expression, or the result of a function or method.

A "widget" may refer to visualization element in the visualization unit, such as a dial, a meter or a slider. A widget may have a plurality of properties, which may be configurable. The widget may have static properties, which do not change during the execution of the visualization. The widget may also have dynamic properties, which may change during the execution of the visualization, such as the position of the pointer on a dial.

A "proxy widget", or shorthand "proxy" may refer to an instance of an implicitly generated function block in the industrial controller unit 28, which may serve as a representative or agent of a widget in the visualization unit 48 and may allow direct access to the variables of the application. The proxy may form part of the application.

A "page" may comprise one or more widgets that are associated with data of an application. A page may also have a handover interface. A page with handover parameters can be linked to different function block instances. This may result in page instances. A page instance can be embedded into a page as a partial image.

A "page instance" may denote an instance of a page, which may be a global page without handover parameters or an instance of a page with handover parameters and corresponding data.

The term "visualization" may refer to the entirety of visualization pages. During runtime, the user may have the possibility of switching between the different visualization pages.

A "proxy page" may refer to an instance of an implicitly generated function block that may be called as a representative of the visualization. The proxy page may comprise all proxy widgets that belong to this page.

A "frame" may also be considered a widget. A frame may reference a single page, or a plurality of pages. During runtime, the visualization may display (exactly) one page from a list of pages. This may also allow picture-in-picture/ page-in-page applications.

A widget and the corresponding proxy may be coupled by means of a direct data coupling. Each widget may be associated one-to-one with the corresponding proxy. The widget receives its data directly from the corresponding proxy, and sends data directly to the corresponding proxy. The association may be implemented by means of a hierarchical ID stack. The data transfer may be implemented by means of command lists and/or event lists.

The functionality of these components will now be presented in greater detail in the context of the industrial control environment 10 and conveyor belt system 12 described above with reference to Figures 1 to 3.

As explained above, the conveyor belt system 12 comprises the first conveyor belt 14a driven by the first motor unit 16a, and the second conveyor belt 14b driven by the second motor unit 16b. The visualization unit 48 may be adapted to display, on the display device 54, a current rotational speed of the respective first conveyor belt 14a and the second conveyor belt 14b, for instance in the form of corresponding dials, such as HTML5 dials . The visualization unit 48 may also display the current values for user-determined limits for the maximum load of the first motor unit 16a and second motor unit 16b, respectively, for instance in the form of meters or sliders, such as HTML5 slider elements that allow the user to set the maximum load to a different value.

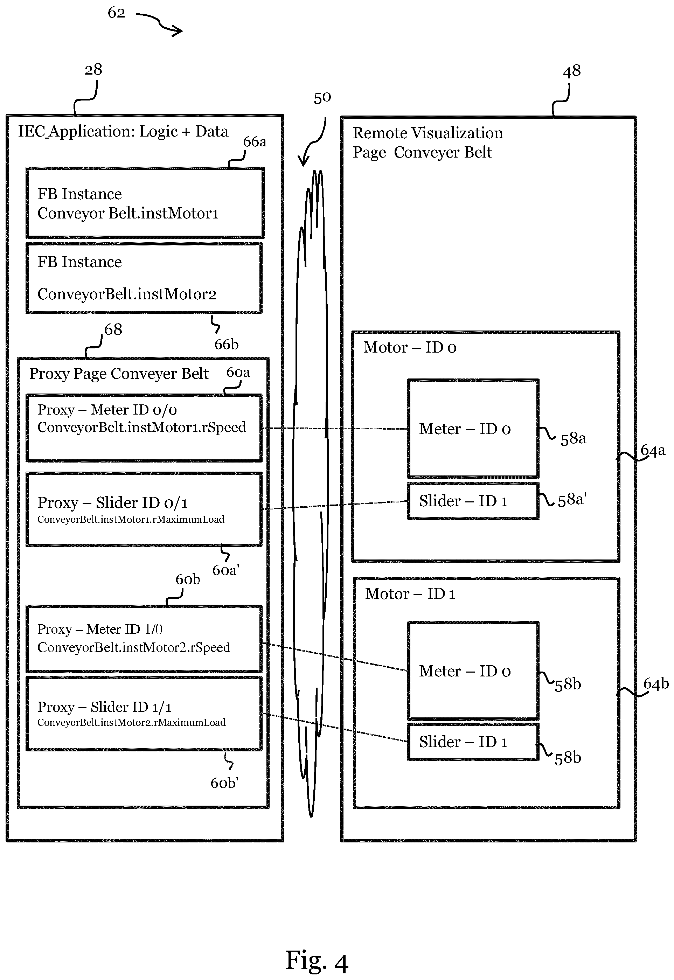

Fig. 4 illustrates the interplay of the widgets and proxies for a system 62 comprising an industrial controller unit 28 and a visualization unit 48 that are connected by means of a communication network 50.

The visualization unit 48 comprises a first visualization page 64a pertaining to the first motor unit 16a (with ID 0) and a second visualization page 64b pertaining to the second motor unit 16b (with ID 1). The first visualization page 64a comprises a first meter widget 58a and a first slider widget 58a' pertaining to the first motor unit 16a. Similarly, the second visualization page 64b comprises a second meter widget 58b and a second slider widget 58b' that are generally similar in its functionality to the first meter widget 58a and the first slider widget 58a', but pertain to the second motor unit 16b.

As can be further taken from Fig. 4, the industrial controller unit 28 comprises two instances 66a, 66b of function blocks pertaining to the first motor unit 16a and the second motor unit 16b, respectively. The industrial controller unit 28 additionally comprises a proxy page 68 pertaining to the conveyor belt system 12. The proxy page 68 comprises two frames, wherein the first frame references the first page 64a in the visualization unit 48 (pertaining to the first motor unit 16a), and comprises a first meter proxy element 60a associated with the first meter widget 58a, and a first slider proxy element 60a' associated with the first slider widget 58a'.

The second frame references the second page 64b in the visualization unit 48 (pertaining to the second motor unit 16b), and comprises a second meter proxy element 60b associated with the second meter widget 58b, and a second slider proxy element 60b' associated with the first slider widget 58b'.

The association and data coupling between the visualization elements 58a, 58a', 58b, 58b' of the visualization unit 48 and the corresponding proxy elements 60a, 60a', 60b, 60b' of the industrial controller unit 28 is one-to-one, as indicated by the dashed lines in Fig. 4.

A corresponding industrial control program *ConveyorBelt* may define two instances of the motor unit, as follows:

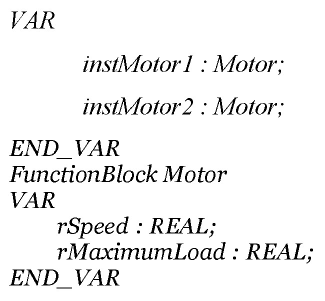

A page/partial image "Motor" may comprise two widgets and a parameter interface:

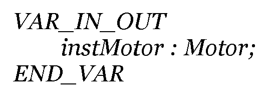

The following project setting can be used for the widgets and proxies pertaining to the conveyor belt:

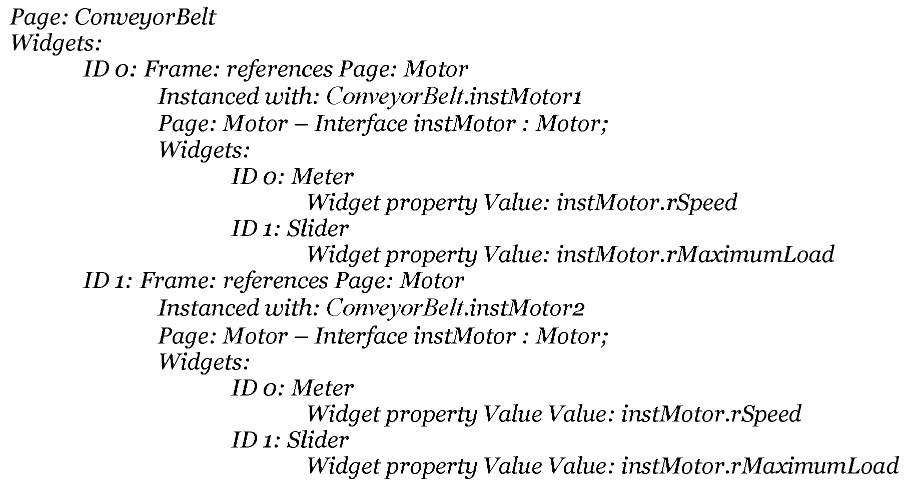

The association and linkage between the widgets 58a, 58a', 58b, 58b' and the proxies 60a, 60a', 60b, 60b' may be achieved by means of identification numbers. Using the communication network 50, the industrial controller unit 26 may send command lists to the visualization unit 48. Conversely, event lists may be sent via the communication network 50 from the visualization unit 48 to the industrial controller unit 28 to update the industrial control program running on the industrial controller unit 28 in accordance with user input to the visualization unit 48.

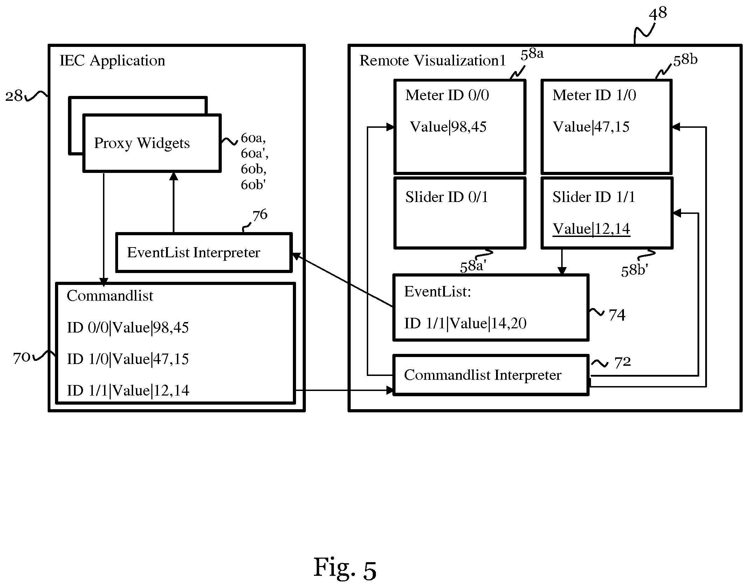

The interplay between the industrial controller unit 28 and the visualization unit 48, and the direct data coupling between widgets and proxies will now be described in additional detail with reference to Figures 4 and 5.

The first meter proxy 60a with ID 0/0 may monitor a first control variable *ConveyorBelt.instMotor1.rSpeed* pertaining to a current speed of the first conveyor belt 14a, and may provide the corresponding value to the first meter widget 58a by means of direct data coupling via the communication network 50. Similarly, the second meter proxy 60b with ID 1/0 may monitor a second control variable *ConveyorBelt.instMotor2.rSpeed* pertaining to a current speed of the second conveyor belt 14b, and may provide the corresponding value to the second meter widget 58b by means of direct data coupling via the communication network 50.

In case the first or second meter proxy 60a, 60b detects a change of the first or second control variable, it may generate at respective command for a command list 70 in the industrial controller unit 28, such as in the format: *Widget ID* | *Widget property* | *Value.* As an example illustrated in Fig. 5, the value of the first control variable *ConveyorBelt.instMotor1.rSpeed* indicating a speed of the first conveyor belt 14a may have changed to 98.45 (in some arbitrary units), and the value of the second control variable *ConveyorBelt.instMotor2.rSpeed* indicating a speed of the second conveyor belt 14b may have changed to 47.15. Consequently, the command list 70 comprises the commands *ID 0*/*0*|*Value* |*98.45* and *ID 1*/*0*|*Value* |*47.15.*

The respective commands may be sent, via the communication network 50, to a command list interpreter 72 provided in the visualization unit 48. The command list interpreter 72 may interpret the respective commands and send the widget property "value" to the respective first or second meter widget 58a, 58b, so that the display may be updated accordingly.

As an example, for a HTML5 table the widget property may comprise a method "update", which may comprise an entire array of data as a value, so that all cells of the table may be provided with updated data.

In addition to the transmission from the industrial controller unit 28 to the visualization 48, transmission in the other direction is also possible. If in the example discussed above the slider is moved, the current value can be transferred to the corresponding proxy, which then executes the corresponding assignment to the control variable. A structured identification number (Frame ID 0, Widget ID 1 => o/1) may be used for the assignment of widget to proxy.

As an example, the first slider widget 58a' may allow the user to set an upper limit for a maximum load of the first motor unit 16a, as a control variable *ConveyorBelt.instMotor1.rMaximumLoad,* such as by moving a first slider in a graphical display on the user input device 56. Similarly, the second slider widget 58b' may allow the user to set an upper limit for a maximum load of the second motor unit 16b, as a control variable *ConveyorBelt.instMotor2.rMaximumLoad,* such as by moving a second slider in a graphical display on the user input device 56.

Again with reference to an example illustrated in Fig. 5, a user may want to set the maximum load for the second motor unit 16b from the present value 12.14 (in some arbitrary units) to a higher value 14.20. The user hence slides the corresponding slider to the new value by means of the user input device 56. The new value may hence be incorporated into an event list 74 of the visualization unit 48, in the format *ID 1*/*1*|*Value*|*14.20.* The visualization unit 48 sends the event list 74 to the industrial controller unit 28 via the communication network 50. The industrial controller unit 28 comprises an event list interpreter 76, which interprets the event list 74 and provides the new value 14.20 to the second slider proxy 60b' pertaining to the second motor unit 16b. The second slider proxy 60b' knows that the control variable *ConveyorBelt.instMotor2.rMaximumLoad* is associated with the widget property "value", and assigns the new value 14.20 to the control variable.

Additional visualization tasks may be implemented in the context of the industrial control environment 10 using similar techniques. For instance, at the packaging station 22 the display device 54 of the visualization unit 48 may schematically illustrate instructions for packaging the goods 18, such as in the form of a HTML5 video, which may be played in accordance with control parameters that indicate the type of the product to be packed. In addition, the visualization unit 48 may also display error messages in accordance with a control parameter of the industrial controller unit 28.

At the labelling station 26, the display device 54 of the visualization unit 48 may display labelling data, which may allow a user to label the packaged goods 24 correctly in accordance with a control parameter that indicates the type of product to be labelled, or a database entry indicating its destination or postal address.

As described above with reference to Figures 1 to 5, the techniques of the disclosure allow implementing at least part of the logic of the visualization on the industrial controller unit 28. A process in which the structure of the visualization and the used data are known on the part of the industrial controller unit 28 can have several advantages:
On the one hand, it may become possible to monitor individual or all values of the control variables in faster intervals than it would be possible with cyclic requests of the visualization to the control, or even with the use of an intermediate computer (e.g. a OPC or OPC UA server). These faster monitoring intervals may become feasible because no transmission via a communication link is necessary. It may even become possible to record individual value changes directly from the context of the changing control task, and to pass them on individually or collectively to the visualization unit 48.

Furthermore, a structured implementation of the visualization based on the data structures of the control application to be displayed may become feasible. This is made possible by the fact that a partial image of the visualization itself is provided with a reference to data (scalar or structured), and can use it for the representation. Representation in this sense may include on the one hand a graphical representation of scalar values, e.g., via a pointer instrument, on the display device 54, and on the other hand the passing on of a partial structure to another partial image. Such a partial image could be, for example, a representation of a motor that is displayed with its parameters (speed, load). This partial image can then be created several times for each motor that actually occurs in the application ("instance") and parameterized with the respective instance.

As an additional advantage, no symbolic information about the used control variables may be necessary at execution time, because the corresponding data is directly part of the proxy on the industrial controller unit 28, for instance as address information. No variable lists (tag lists) may need to be adjusted. The data coupling is always up-to-date and may be checked by the compiler. When a page is changed, the widgets may be supplied with data directly via the proxies. No variable lists have to be logged on and off. This may result in faster page change times.

During the execution time of the visualization, the proxy on the controller may monitor the configured control variables. If these have changed compared to the previous check, an instruction for assigning the corresponding current value to the configured widget property may be transmitted. For instance, in the case of a HTML5 element, this may be implemented in JavaScript in the format: *ID 0*/*0*|*Value* |*98.45 -> meter.Value(98.45).*

In the case of an expression, only the result may need to be transferred, and not all variables within the expression. In addition, methods and properties of an IEC object can also be used in the expression (all object-oriented IEC language resources).

The data transmission is as compact as possible, and is only carried out if the calculated value has changed. The data transfer may take place in a point-to-point connection between the proxy within the industrial controller unit 28 and the widget within the visualization unit 48.

The respective proxy may check the updated data in a separate task with a priority that is lower than the priority of the control task. As a result, the control task that implements the control of the industrial process may run without being interrupted by the visualization.

As an additional option, the update may relegated to an end of the task cycle of the control application. This may ensure a cycle consistency of the data. For instance, historic values of a given variable may be recorded at the end of each task cycle, so as to provide the user with a historical trend of the respective values.

The values can be transferred between the industrial controller unit 28 and the visualization unit 48 in an optimized form. In addition to scalar values, the transmission of more complex data is also possible, comprising but not limited to:
- two-dimensional data, e.g. ARRAY OF STRUCT,
- sections from two-dimensional data, e.g. ARRAY OF STRUCT with a section selected by the visualization,
- contents of a concatenated list,
- contents of a property or method of a function block or an interface,
- values with temporal progression,
- alarm data.

The techniques of the present disclosure allow arbitrary nesting depths. In the examples described above, the nesting depth was limited to two for simplicity and clarity of the presentation, but the disclosure is not so limited. The IDs may be generated by the system, so the user does not have to deal with it.

Options of the data connection may include:
All object-oriented features of a function module instance can be used.
- Widget receives the result of a method call of a function block instance.
- Widget receives the result of a method call of an interface.
- Widget receives the result of any expression previously calculated in the industrial controller unit 28.
- Widget may pass a value change to a method of an object instance by means of a user input.

The techniques of the disclosure may yield a number of advantages during project planning:
- The direct data connection may be created implicitly by configuring a function block instance or an interface instance on a partial image. The data connection does not have to be managed separately in the form of tag lists.
- Any nesting is possible. Parts of a function block instance may be passed again on to a partial image with parameters.
- Object-oriented programming is possible both in the IEC application and in the visualization.

The proxy element may perform the following tasks:
- It may check cyclically whether the linked control variables have changed. Since the proxy element may be contained in the same IEC application, it may have direct access to the control variables. Furthermore, the proxy element may manage the proxy meta data, which may allow it to determine a change in the data to be visualized. For instance, the proxy element may form a checksum of the control variables and check cyclically whether the checksum has changed.
- If a change is detected, an update command may be generated directly for the linked widget. All widgets may obtain a unique ID. The command may contain the ID of the visualization element, the widget property to be called in the widget and the value of the control variable to be updated in the widget.
- In addition, value change events may be sent from the visualization to the control application if, for example, a value for a variable was entered in a visualization or if a value was changed using a slider. The proxy may write the value change to the control variable.

The visualization unit 48 may check for value changes cyclically via a polling mechanism, and as soon as value change commands are available, query them from the industrial controller unit 28. However, it is also possible for the industrial controller unit 28 to send events directly to the visualization unit 48 as soon as value change commands are available. Input events from the visualization unit may always be sent as events, since the input reaction speed can be an important feature for visualization systems.

For ease of presentation, the description of the embodiments has so far been restricted to the case of a complete mapping of the visualized data in the control logic. However, the disclosure is not so limited, and a partial representation is also feasible. For instance, proxies may be created merely for the instances, while frames and pages may be calculated in the visualization. In such a scenario, pages could be created dynamically during the visualization runtime without the need to download the control application again.

In some embodiments, the project planning of the IEC application and visualization may take place in one project. In particular, the industrial control application and the visualization application may be compiled together. This in turn may entail that the IEC application should also be updated each time the visualization is changed, which may sometimes not be desired.

An alternative approach may create the proxies for the visualization together with an IEC application, but not necessarily the widgets. In addition, the user may merely specify which widgets of a given set of widgets may be used to visualize the proxies. This information may become part of the IEC application.

It then becomes possible to create the visualization without having to update the IEC application. A "browse" process may list all proxies of the IEC application and their possible widgets. The widgets may be part of a visualization tool. In the visualization tool, the user merely needs to interconnect the widgets with the proxies. The widgets can then be placed anywhere on different pages. Project planning thereby becomes a simple process that is possible even without programming knowledge.

This approach may offer the following advantages: An industrial controller unit brings everything with which the visualization is to be provided. Project planning of the visualization becomes possible without having to update the IEC application. The interconnection of the objects is very simple.

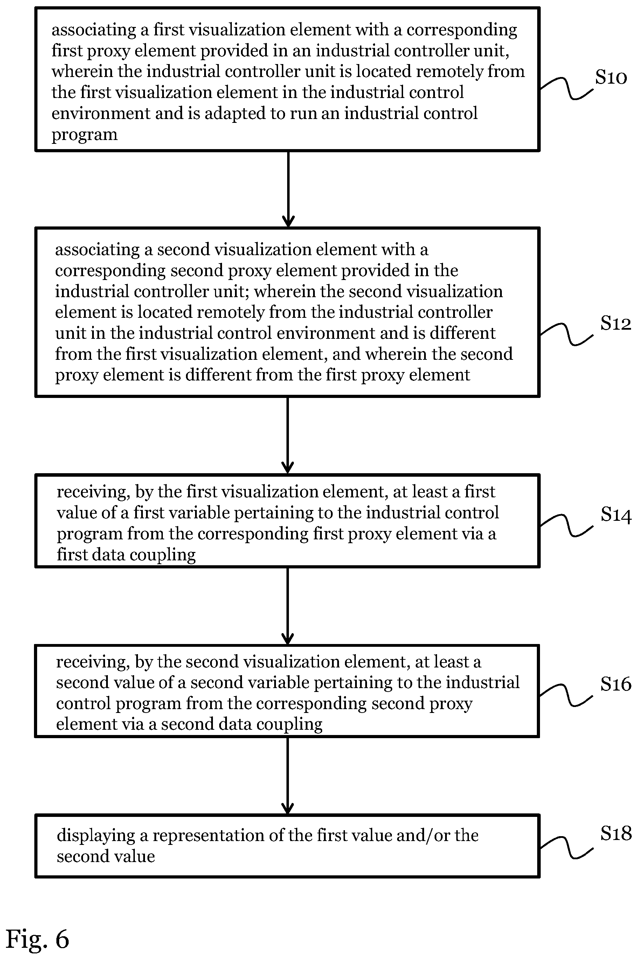

Fig. 6 is a schematic illustration of an exemplary method for data coupling in an industrial control environment, from the perspective of a visualization unit, such as the visualization unit 48.

In a first step S10, a first visualization element is associated with a corresponding first proxy element provided in an industrial controller unit, wherein the industrial controller unit is located remotely from the first visualization element in the industrial control environment and is adapted to run an industrial control program.

In a second step S12, a second visualization element is associated with a corresponding second proxy element provided in the industrial controller unit, wherein the second visualization element is located remotely from the industrial controller unit in the industrial control environment and is different from the first visualization element, and wherein the second proxy element is different from the first proxy element.

In a third step S14, the first visualization element receives at least a first value of a first variable pertaining to the industrial control program from the corresponding first proxy element via a first data coupling.

In a fourth step S16, the second visualization element receives at least a second value of a second variable pertaining to the industrial control program from the corresponding second proxy element via a second data coupling.

In a fifth step S18, a representation of the first value and/or the second value is displayed.

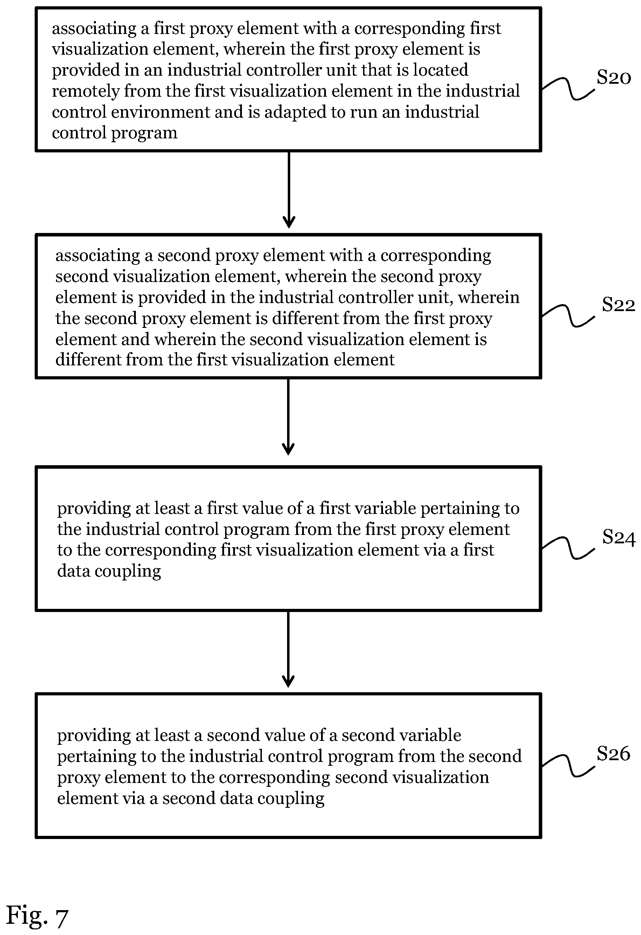

Fig. 7 is a schematic illustration of an exemplary method for data coupling in an industrial control environment from the complementary perspective of an industrial controller unit, such as the industrial controller unit 28.

In a first step S20, a first proxy element is associated with a corresponding first visualization element, wherein the first proxy element is provided in an industrial controller unit that is located remotely from the first visualization element in the industrial control environment and is adapted to run an industrial control program.

In a second step S22, a second proxy element is associated with a corresponding second visualization element, wherein the second proxy element is provided in the industrial controller unit, wherein the second proxy element is different from the first proxy element and wherein the second visualization element is different from the first visualization element.

In a third step S24, at least a first value of a first variable pertaining to the industrial control program is provided from the first proxy element to the corresponding first visualization element via a first data coupling.

In a fourth step S26, at least a second value of a second variable pertaining to the industrial control program is provided from the second proxy element to the corresponding second visualization element via a second data coupling.

The flow diagrams of Figures 6 and 7 show the method steps S10 to S18 and S20 to S26 in a certain order. However, this is for ease of presentation only, and the method steps may also be executed in a different order.

The description of the embodiments and the figures merely serve to illustrate the techniques of the present disclosure, but should not be construed to imply any limitation. The scope of the disclosure is to be determined from the appended claims.

### Reference signs

- 10: industrial control environment
- 12: conveyor belt system
- 14a, 14b: first, second conveyor belt of conveyer belt system 12
- 16a: first motor unit of first conveyor belt 14a
- 16b: second motor unit of second conveyor belt 14b
- 18: goods
- 20: manufacturing station
- 22: packaging station
- 24: packaged goods
- 26: labelling station
- 28: industrial controller unit
- 30: control line
- 32: processing element of industrial controller unit 28
- 34: memory element of industrial controller unit 28
- 36: programming environment
- 38: network
- 40: programming interface of programming environment 38
- 42: a programming memory unit of programming environment 38
- 44: programming processor unit of programming environment 38
- 46: compiler unit of programming environment 38
- 48: visualization unit
- 50: communication network
- 52: user interface of visualization unit 48
- 54: display device
- 56: user input device
- 58a, 58b: visualization elements
- 58a', 58b': visualization elements
- 60a, 60b: proxy elements
- 60a', 60b': proxy elements
- 62: system comprising industrial controller unit 28 and visualization unit 48
- 64a, 64b: visualization pages
- 66a, 66b: instances of function blocks
- 68: proxy page
- 70: command list
- 72: command list interpreter
- 74: event list
- 76: event list interpreter

## Claims

1. A visualization unit (48) for an industrial control environment (10), comprising:
a first visualization element (58a, 58a', 58b, 58b') which is associated with a corresponding first proxy element (60a, 60a', 60b, 60b') provided in an industrial controller unit (28), wherein the industrial controller unit (28) is located remotely from the visualization unit (48) in the industrial control environment (10) and is adapted to run an industrial control program, and wherein the first proxy element (60a, 60a', 60b, 60b') serves as a representative of the first visualization element (58a, 58a', 58b, 58b') in the industrial controller unit (28);
wherein the first visualization element (58a, 58a', 58b, 58b') is adapted to receive at least a first value of a first variable pertaining to the industrial control program from the corresponding first proxy element (60a, 60a', 60b, 60b') via a first data coupling; and
a second visualization element (58a, 58a', 58b, 58b') which is associated with a corresponding second proxy element (60a, 60a', 60b, 60b') provided in the industrial controller unit (28), wherein the second visualization element (58a, 58a', 58b, 58b') is different from the first visualization element (58a, 58a', 58b, 58b') and wherein the second proxy element (60a, 60a', 60b, 60b') is different from the first proxy element (60a, 60a', 60b, 60b'), and wherein the second proxy element (60a, 60a', 60b, 60b') serves as a representative of the second visualization element (58a, 58a', 58b, 58b') in the industrial controller unit (28);
wherein the second visualization element (58a, 58a', 58b, 58b') is adapted to receive at least a second value of a second variable pertaining to the industrial control program from the corresponding second proxy element (60a, 60a', 60b, 60b') via a second data coupling; and
a user interface (52) adapted to display a representation of the first value and/or the second value.

2. The visualization unit (48) according to claim 1, wherein the first data coupling is a direct data coupling between the first visualization element (58a, 58a', 58b, 58b') and the first proxy element (60a, 60a', 60b, 60b'), in particular a point-to-point coupling between the first visualization element (58a, 58a', 58b, 58b') and the first proxy element (60a, 60a', 60b, 60b'), and/or wherein the second data coupling is a direct data coupling between the second visualization element (58a, 58a', 58b, 58b') and the second proxy element (60a, 60a', 60b, 60b'), in particular a point-to-point coupling between the second visualization element (58a, 58a', 58b, 58b') and the second proxy element (60a, 60a', 60b, 60b').

3. The visualization unit (48) according to any of the preceding claims, wherein the user interface (52) is adapted to receive user input data pertaining to the first variable and/or the second variable, and to provide the user input data to the first proxy element (60a, 60a', 60b, 60b') and/or to the second proxy element (60a, 60a', 60b, 60b'), respectively.

4. The visualization unit (48) according to any of the preceding claims, wherein the visualization unit (48), in particular the first visualization element (58a, 58a', 58b, 58b'), is adapted to query the first proxy element (60a, 60a', 60b, 60b') for the first value.

5. An industrial controller unit (28), comprising:
a first proxy element (60a, 60a', 60b, 60b') which is associated with a corresponding first visualization element (58a, 58a', 58b, 58b') provided in a visualization unit (48) according to claim 1,
wherein the industrial controller unit (28) is located remotely from the visualization unit (48) in an industrial control environment (10) and is adapted to run an industrial control program;
wherein the first proxy element (60a, 60a', 60b, 60b') serves as a representative of the first visualization element (58a, 58a', 58b, 58b') in the industrial controller unit (28); and
wherein the first proxy element (60a, 60a', 60b, 60b') is adapted to provide at least a first value of a first variable pertaining to the industrial control program to the corresponding first visualization element (58a, 58a', 58b, 58b') via a first data coupling; and
a second proxy element (60a, 60a', 60b, 60b') which is associated with a corresponding second visualization element (58a, 58a', 58b, 58b') provided in the visualization unit (48), wherein the second proxy element (60a, 60a', 60b, 60b') is different from the first proxy element (60a, 60a', 60b, 60b') and wherein the second visualization element (58a, 58a', 58b, 58b') is different from the first visualization element (58a, 58a', 58b, 58b');
wherein the second proxy element (60a, 60a', 60b, 60b') serves as a representative of the second visualization element (58a, 58a', 58b, 58b') in the industrial controller unit (28); and
wherein the second proxy element (60a, 60a', 60b, 60b') is adapted to provide at least a second value of a second variable pertaining to the industrial control program to the corresponding second visualization element (58a, 58a', 58b, 58b') via a second data coupling.

6. The industrial controller unit (28) according to claim 5, further comprising a memory element (34) adapted to store the first variable and/or the second variable, wherein the first proxy element (60a, 60a', 60b, 60b') is adapted to query the first variable from the memory element (34) and/or wherein the second proxy element (60a, 60a', 60b, 60b') is adapted to query the second variable from the memory element (34), in particular in accordance with a query task.

7. The industrial controller unit (28) according to claim 5 or 6, wherein the first proxy element (60a, 60a', 60b, 60b') is adapted to provide the first value to the first visualization element (58a, 58a', 58b, 58b') in response to a query received from the visualization unit (48), in particular from the first visualization element (58a, 58a', 58b, 58b').

8. The industrial controller unit (26) according to any of the claims 5 to 7, wherein the first proxy element (60a, 60a', 60b, 60b') is adapted to receive user input data from the visualization unit (48), in particular from the first visualization element (58a, 58a', 58b, 58b'), and to modify the first variable in accordance with the user input data.

9. A system (62) comprising a visualization unit (48) according to any of the claims 1 to 4 and an industrial controller unit (28) according to any of the claims 5 to 8.

10. A method for data coupling in an industrial control environment (10), comprising:
associating a first visualization element (58a, 58a', 58b, 58b') with a corresponding first proxy element (60a, 60a', 60b, 60b') provided in an industrial controller unit (28), wherein the industrial controller unit (28) is located remotely from the first visualization element (58a, 58a', 58b, 58b') in the industrial control environment (10) and is adapted to run an industrial control program, and wherein the first proxy element (60a, 60a', 60b, 60b') serves as a representative of the first visualization element (58a, 58a', 58b, 58b') in the industrial controller unit (28);
associating a second visualization element (58a, 58a', 58b, 58b') with a corresponding second proxy element (60a, 60a', 60b, 60b') provided in the industrial controller unit (28); wherein the second visualization element (58a, 58a', 58b, 58b') is located remotely from the industrial controller unit (28) in the industrial control environment (10) and is different from the first visualization element (58a, 58a', 58b, 58b'), and wherein the second proxy element (60a, 60a', 60b, 60b') is different from the first proxy element (60a, 60a', 60b, 60b'), and wherein the second proxy element (60a, 60a', 60b, 60b') serves as a representative of the second visualization element (58a, 58a', 58b, 58b') in the industrial controller unit (28);
receiving, by the first visualization element (58a, 58a', 58b, 58b'), at least a first value of a first variable pertaining to the industrial control program from the corresponding first proxy element (60a, 60a', 60b, 60b') via a first data coupling;
receiving, by the second visualization element (58a, 58a', 58b, 58b'), at least a second value of a second variable pertaining to the industrial control program from the corresponding second proxy element (60a, 60a', 60b, 60b') via a second data coupling; and
displaying a representation of the first value and/or the second value.

11. The method according to claim 10, further comprising:
receiving user input data pertaining to the first variable and/or the second variable; and
providing the user input data to the first proxy element (60a, 60a', 60b, 60b') and/or the second proxy element (60a, 60a', 60b, 60b'), respectively.

12. The method according to claim 10 or 11, further comprising:
querying the first proxy element (60a, 60a', 60b, 60b') for the first value, in particular by means of the first visualization element (58a, 58a', 58b, 58b'); and/or
querying the second proxy element (60a, 60a', 60b, 60b') for the second value, in particular by means of the second visualization element (58a, 58a', 58b, 58b').

13. A method for data coupling in an industrial control environment (10), comprising:
associating a first proxy element (60a, 60a', 60b, 60b') with a corresponding first visualization element (58a, 58a', 58b, 58b'), wherein the first proxy element (60a, 60a', 60b, 60b') is provided in an industrial controller unit (28) that is located remotely from the first visualization element (58a, 58a', 58b, 58b') in the industrial control environment (10) and is adapted to run an industrial control program, and wherein the first proxy element (60a, 60a', 60b, 60b') serves as a representative of the first visualization element (58a, 58a', 58b, 58b') in the industrial controller unit (28);
associating a second proxy element (60a, 60a', 60b, 60b') with a corresponding second visualization element (58a, 58a', 58b, 58b'), wherein the second proxy element (60a, 60a', 60b, 60b') is provided in the industrial controller unit (28), wherein the second proxy element (60a, 60a', 60b, 60b') is different from the first proxy element (60a, 60a', 60b, 60b') and wherein the second visualization element (58a, 58a', 58b, 58b') is different from the first visualization element (58a, 58a', 58b, 58b'), and wherein the second proxy element (60a, 60a', 60b, 60b') serves as a representative of the second visualization element (58a, 58a', 58b, 58b') in the industrial controller unit (28);
providing at least a first value of a first variable pertaining to the industrial control program from the first proxy element (60a, 60a', 60b, 60b') to the corresponding first visualization element (58a, 58a', 58b, 58b') via a first data coupling; and
providing at least a second value of a second variable pertaining to the industrial control program from the second proxy element (60a, 60a', 60b, 60b') to the corresponding second visualization element (58a, 58a', 58b, 58b') via a second data coupling.

14. The method according to claim 13, further comprising:
querying, by the first proxy element (60a, 60a', 60b, 60b'), the first variable from a memory element (34) of the industrial controller unit (28), in particular in accordance with a query task.

15. A computer program comprising computer-readable instructions, such that the instructions, when read on a computer, are adapted to implement a method according to any of the claims 10 to 14.

## Patentansprüche

1. Visualisierungseinheit (48) für eine industrielle Steuerungsumgebung (10), umfassend:
ein erstes Visualisierungselement (58a, 58a', 58b, 58b'), das einem entsprechenden ersten Proxy-Element (60a, 60a', 60b, 60b') zugeordnet ist, das in einer industriellen Steuerungseinheit (28) bereitgestellt ist, wobei sich die industrielle Steuerungseinheit (28) entfernt von der Visualisierungseinheit (48) in der industriellen Steuerungsumgebung (10) befindet und dazu ausgelegt ist, ein industrielles Steuerungsprogramm auszuführen, und wobei das erste Proxy-Element (60a, 60a', 60b, 60b') als ein Repräsentant des ersten Visualisierungselements (58a, 58a', 58b, 58b') in der industriellen Steuerungseinheit (28) dient;
wobei das erste Visualisierungselement (58a, 58a', 58b, 58b') dazu eingerichtet ist, mindestens einen ersten Wert einer ersten Variablen, die sich auf das industrielle Steuerungsprogramm bezieht, von dem entsprechenden ersten Proxy-Element (60a, 60a', 60b, 60b') über eine erste Datenkopplung zu empfangen; und
ein zweites Visualisierungselement (58a, 58a', 58b, 58b'), das einem entsprechenden zweiten Proxy-Element (60a, 60a', 60b, 60b') zugeordnet ist, das in der industriellen Steuerungseinheit (28) bereitgestellt ist, wobei das zweite Visualisierungselement (58a, 58a', 58b, 58b') von dem ersten Visualisierungselement (58a, 58a', 58b, 58b') verschieden ist und wobei sich zweite Proxy-Element (60a, 60a', 60b, 60b') von dem ersten Proxy-Element (60a, 60a', 60b, 60b') verschieden ist und wobei das zweite Proxy-Element (60a, 60a', 60b, 60b') als ein Repräsentant des zweiten Visualisierungselements (58a, 58a', 58b, 58b') in der industriellen Steuerungseinheit (28) dient;
wobei das zweite Visualisierungselement (58a, 58a', 58b, 58b') dazu eingerichtet ist, mindestens einen zweiten Wert einer zweiten Variablen, die sich auf das industrielle Steuerungsprogramm bezieht, von dem entsprechenden zweiten Proxy-Element (60a, 60a', 60b, 60b') über eine zweite Datenkopplung zu empfangen; und
eine Benutzerschnittstelle (52), die dazu eingerichtet ist, eine Darstellung des ersten Werts und/oder des zweiten Werts anzuzeigen.

2. Visualisierungseinheit (48) nach Anspruch 1, wobei die erste Datenkopplung eine direkte Datenkopplung zwischen dem ersten Visualisierungselement (58a, 58a', 58b, 58b') und dem ersten Proxy-Element (60a, 60a', 60b, 60b') ist, insbesondere eine Punkt-zu-Punkt-Kopplung zwischen dem ersten Visualisierungselement (58a, 58a', 58b, 58b') und dem ersten Proxy-Element (60a, 60a', 60b, 60b'), und/oder wobei die zweite Datenkopplung eine direkte Datenkopplung zwischen dem zweiten Visualisierungselement (58a, 58a', 58b, 58b') und dem zweiten Proxy-Element (60a, 60a', 60b, 60b') ist, insbesondere eine Punkt-zu-Punkt-Kopplung zwischen dem zweiten Visualisierungselement (58a, 58a', 58b, 58b') und dem zweiten Proxy-Element (60a, 60a', 60b, 60b').

3. Visualisierungseinheit (48) nach einem der vorhergehenden Ansprüche, wobei die Benutzerschnittstelle (52) dazu ausgelegt ist, Benutzereingabedaten zu empfangen, die sich auf die erste Variable und/oder die zweite Variable beziehen, und die Benutzereingabedaten dem ersten Proxy-Element (60a, 60a', 60b, 60b') bzw. dem zweiten Proxy-Element (60a, 60a', 60b, 60b') bereitzustellen.

4. Visualisierungseinheit (48) nach einem der vorhergehenden Ansprüche, wobei die Visualisierungseinheit (48), insbesondere das erste Visualisierungselement (58a, 58a', 58b, 58b'), dazu ausgelegt ist, das erste Proxy-Element (60a, 60a', 60b, 60b') nach dem ersten Wert abzufragen.

5. Industrielle Steuerungseinheit (28), umfassend:
ein erstes Proxy-Element (60a, 60a', 60b, 60b'), das einem entsprechenden ersten Visualisierungselement (58a, 58a', 58b, 58b') zugeordnet ist, das in einer Visualisierungseinheit (48) nach Anspruch 1 bereitgestellt ist,
wobei sich die industrielle Steuerungseinheit (28) entfernt von der Visualisierungseinheit (48) in einer industriellen Steuerungsumgebung (10) befindet und dazu ausgelegt ist, ein industrielles Steuerungsprogramm auszuführen;
wobei das erste Proxy-Element (60a, 60a', 60b, 60b') als ein Repräsentant des ersten Visualisierungselements (58a, 58a', 58b, 58b') in der industriellen Steuerungseinheit (28) dient; und
wobei das erste Proxy-Element (60a, 60a', 60b, 60b') dazu eingerichtet ist, mindestens einen ersten Wert einer ersten Variablen, die sich auf das industrielle Steuerungsprogramm bezieht, dem entsprechenden ersten Visualisierungselement (58a, 58a', 58b, 58b') über eine erste Datenkopplung bereitzustellen; und
ein zweites Proxy-Element (60a, 60a', 60b, 60b'), das einem entsprechenden zweiten Visualisierungselement (58a, 58a', 58b, 58b') zugeordnet ist, das in der Visualisierungseinheit (48) bereitgestellt ist, wobei das zweite Proxy-Element (60a, 60a', 60b, 60b') von dem ersten Proxy-Element (60a, 60a', 60b, 60b') verschieden ist und wobei das zweite Visualisierungselement (58a, 58a', 58b, 58b') von dem ersten Visualisierungselement (58a, 58a', 58b, 58b') verschieden ist;
wobei das zweite Proxy-Element (60a, 60a', 60b, 60b') als ein Repräsentant des zweiten Visualisierungselements (58a, 58a', 58b, 58b') in der industriellen Steuerungseinheit (28) dient; und
wobei das zweite Proxy-Element (60a, 60a', 60b, 60b') dazu eingerichtet ist, mindestens einen zweiten Wert einer zweiten Variablen, die sich auf das industrielle Steuerungsprogramm bezieht, dem entsprechenden zweiten Visualisierungselement (58a, 58a', 58b, 58b') über eine zweite Datenkopplung bereitzustellen.

6. Industrielle Steuerungseinheit (28) nach Anspruch 5, ferner umfassend ein Speicherelement (34), das dazu eingerichtet ist, die erste Variable und/oder die zweite Variable zu speichern, wobei das erste Proxy-Element (60a, 60a', 60b, 60b') dazu eingerichtet ist, die erste Variable aus dem Speicherelement (34) abzufragen und/oder wobei das zweite Proxy-Element (60a, 60a', 60b, 60b') dazu eingerichtet ist, die zweite Variable aus dem Speicherelement (34) abzufragen, insbesondere gemäß einer Abfrageaufgabe.

7. Industrielle Steuerungseinheit (28) nach Anspruch 5 oder 6, wobei das erste Proxy-Element (60a, 60a', 60b, 60b') dazu eingerichtet ist, den ersten Wert dem ersten Visualisierungselement (58a, 58a', 58b, 58b') als Reaktion auf eine von der Visualisierungseinheit (48), insbesondere von dem ersten Visualisierungselement (58a, 58a', 58b, 58b'), empfangene Abfrage bereitzustellen.

8. Industrielle Steuerungseinheit (26) nach einem der Ansprüche 5 bis 7, wobei das erste Proxy-Element (60a, 60a', 60b, 60b') dazu eingerichtet ist, Benutzereingabedaten von der Visualisierungseinheit (48), insbesondere von dem ersten Visualisierungselement (58a, 58a', 58b, 58b'), zu empfangen und die erste Variable gemäß den Benutzereingabedaten zu modifizieren.

9. System (62), umfassend eine Visualisierungseinheit (48) nach einem der Ansprüche 1 bis 4 und eine industrielle Steuerungseinheit (28) nach einem der Ansprüche 5 bis 8.

10. Verfahren zur Datenkopplung in einer industriellen Steuerungsumgebung (10), umfassend:
Zuordnen eines ersten Visualisierungselements (58a, 58a', 58b, 58b') zu einem entsprechenden ersten Proxy-Element (60a, 60a', 60b, 60b'), das in einer industriellen Steuerungseinheit (28) bereitgestellt ist, wobei sich die industrielle Steuerungseinheit (28) entfernt von dem ersten Visualisierungselement (58a, 58a', 58b, 58b') in der industriellen Steuerungsumgebung (10) befindet und dazu eingerichtet ist, ein industrielles Steuerungsprogramm auszuführen, und wobei das erste Proxy-Element (60a, 60a', 60b, 60b') als ein Repräsentant des ersten Visualisierungselements (58a, 58a', 58b, 58b') in der industriellen Steuerungseinheit (28) dient;
Zuordnen eines zweiten Visualisierungselements (58a, 58a', 58b, 58b') zu einem entsprechenden zweiten Proxy-Element (60a, 60a', 60b, 60b'), das in der industriellen Steuerungseinheit (28) bereitgestellt ist; wobei sich das zweite Visualisierungselement (58a, 58a', 58b, 58b') entfernt von der industriellen Steuerungseinheit (28) in der industriellen Steuerungsumgebung (10) befindet und von dem ersten Visualisierungselement (58a, 58a', 58b, 58b') verschieden ist, und wobei das zweite Proxy-Element (60a, 60a', 60b, 60b') von dem ersten Proxy-Element (60a, 60a', 60b, 60b') verschieden ist, und wobei das zweite Proxy-Element (60a, 60a', 60b, 60b') als ein Repräsentant des zweiten Visualisierungselements (58a, 58a', 58b, 58b') in der industriellen Steuerungseinheit (28) dient;
Empfangen, durch das erste Visualisierungselement (58a, 58a', 58b, 58b'), mindestens eines ersten Werts einer ersten Variablen, die sich auf das industrielle Steuerungsprogramm bezieht, von dem entsprechenden ersten Proxy-Element (60a, 60a', 60b, 60b') über eine erste Datenkopplung;
Empfangen, durch das zweite Visualisierungselement (58a, 58a', 58b, 58b'), mindestens eines zweiten Werts einer zweiten Variablen, die sich auf das industrielle Steuerungsprogramm bezieht, von dem entsprechenden zweiten Proxy-Element (60a, 60a', 60b, 60b') über eine zweite Datenkopplung; und
Anzeigen einer Darstellung des ersten Werts und/oder des zweiten Werts.

11. Verfahren nach Anspruch 10, ferner umfassend:
Empfangen von Benutzereingabedaten, die sich auf die erste Variable und/oder die zweite Variable beziehen; und
Bereitstellen der Benutzereingabedaten dem ersten Proxy-Element (60a, 60a', 60b, 60b') bzw. dem zweiten Proxy-Element (60a, 60a', 60b, 60b').

12. Verfahren nach Anspruch 10 oder 11, ferner umfassend:
Abfragen des ersten Proxy-Elements (60a, 60a', 60b, 60b') nach dem ersten Wert, insbesondere mittels des ersten Visualisierungselements (58a, 58a', 58b, 58b'); und/oder
Abfragen des zweiten Proxy-Elements (60a, 60a', 60b, 60b') nach dem zweiten Wert, insbesondere mittels des zweiten Visualisierungselements (58a, 58a', 58b, 58b').

13. Verfahren zur Datenkopplung in einer industriellen Steuerungsumgebung (10), umfassend:
Zuordnen eines ersten Proxy-Elements (60a, 60a', 60b, 60b') zu einem entsprechenden ersten Visualisierungselement (58a, 58a', 58b, 58b'), wobei das erste Proxy-Element (60a, 60a', 60b, 60b') in einer industriellen Steuerungseinheit (28) bereitgestellt ist, die sich entfernt von dem ersten Visualisierungselement (58a, 58a', 58b, 58b') in der industriellen Steuerungsumgebung (10) befindet und dazu eingerichtet ist, ein industrielles Steuerungsprogramm auszuführen, und wobei das erste Proxy-Element (60a, 60a', 60b, 60b') als ein Repräsentant des ersten Visualisierungselements (58a, 58a', 58b, 58b') in der industriellen Steuerungseinheit (28) dient;
Zuordnen eines zweiten Proxy-Elements (60a, 60a', 60b, 60b') zu einem entsprechenden zweiten Visualisierungselement (58a, 58a', 58b, 58b'), wobei das zweite Proxy-Element (60a, 60a', 60b, 60b') in der industriellen Steuerungseinheit (28) bereitgestellt ist, wobei das zweite Proxy-Element (60a, 60a', 60b, 60b') von dem ersten Proxy-Element (60a, 60a', 60b, 60b') verschieden ist und wobei das zweite Visualisierungselement (58a, 58a', 58b, 58b') von dem ersten Visualisierungselement (58a, 58a', 58b, 58b') verschieden ist, und wobei das zweite Proxy-Element (60a, 60a', 60b, 60b') als ein Repräsentant des zweiten Visualisierungselements (58a, 58a', 58b, 58b') in der industriellen Steuerungseinheit (28) dient;
Bereitstellen mindestens eines ersten Werts einer ersten Variablen, die sich auf das industrielle Steuerungsprogramm bezieht, von dem ersten Proxy-Element (60a, 60a', 60b, 60b') dem entsprechenden ersten Visualisierungselement (58a, 58a', 58b, 58b') über eine erste Datenkopplung; und
Bereitstellen mindestens eines zweiten Werts einer zweiten Variablen, die sich auf das industrielle Steuerungsprogramm bezieht, von dem zweiten Proxy-Element (60a, 60a', 60b, 60b') dem entsprechenden zweiten Visualisierungselement (58a, 58a', 58b, 58b') über eine zweite Datenkopplung.

14. Verfahren nach Anspruch 13, ferner umfassend:
Abfragen, durch das erste Proxy-Element (60a, 60a', 60b, 60b'), der ersten Variablen aus einem Speicherelement (34) der industriellen Steuerungseinheit (28), insbesondere gemäß einer Abfrageaufgabe.

15. Computerprogramm, umfassend computerlesbare Anweisungen, so dass die Anweisungen, wenn sie auf einem Computer gelesen werden, dazu eingerichtet sind, um ein Verfahren nach einem der Ansprüche 10 bis 14 zu implementieren.

## Revendications

1. Unité de visualisation (48) pour un environnement de contrôle industriel (10), comprenant :
un premier élément de visualisation (58a, 58a', 58b, 58b') qui est associé à un premier élément mandataire correspondant (60a, 60a', 60b, 60b') prévu dans une unité de contrôleur industriel (28), dans laquelle l'unité de contrôleur industriel (28) est située à distance de l'unité de visualisation (48) dans l'environnement de contrôle industriel (10) et est adaptée pour exécuter un programme de contrôle industriel, et dans laquelle le premier élément mandataire (60a, 60a', 60b, 60b') agit comme représentant du premier élément de visualisation (58a, 58a', 58b, 58b') dans l'unité de contrôleur industriel (28) ;
dans laquelle le premier élément de visualisation (58a, 58a', 58b, 58b') est adapté pour recevoir au moins une première valeur d'une première variable se rapportant au programme de contrôle industriel du premier élément mandataire correspondant (60a, 60a', 60b, 60b') via une première liaison de données ; et
un deuxième élément de visualisation (58a, 58a', 58b, 58b') qui est associé à un deuxième élément mandataire correspondant (60a, 60a', 60b, 60b') prévu dans l'unité de contrôleur industriel (28), dans laquelle le deuxième élément de visualisation (58a, 58a', 58b, 58b') est différent du premier élément de visualisation (58a, 58a', 58b, 58b') et dans laquelle le deuxième élément mandataire (60a, 60a', 60b, 60b') est différent du premier élément mandataire (60a, 60a', 60b, 60b'), et dans laquelle le deuxième élément mandataire (60a, 60a', 60b, 60b') agit comme représentant du deuxième élément de visualisation (58a, 58a', 58b, 58b') dans l'unité de contrôleur industriel (28) ;
dans laquelle le deuxième élément de visualisation (58a, 58a', 58b, 58b') est adapté pour recevoir au moins une deuxième valeur d'une deuxième variable se rapportant au programme de contrôle industriel du deuxième élément mandataire correspondant (60a, 60a', 60b, 60b') via une deuxième liaison de données ; et
une interface utilisateur (52) adaptée pour afficher une représentation de la première valeur et/ou de la deuxième valeur.

2. Unité de visualisation (48) selon la revendication 1, dans laquelle la première liaison de données est une liaison de données directe entre le premier élément de visualisation (58a, 58a', 58b, 58b') et le premier élément mandataire (60a, 60a', 60b, 60b'), en particulier une liaison point à point entre le premier élément de visualisation (58a, 58a', 58b, 58b') et le premier élément mandataire (60a, 60a', 60b, 60b'), et/ou dans laquelle la deuxième liaison de données est une liaison de données directe entre le deuxième élément de visualisation (58a, 58a', 58b, 58b') et le deuxième élément mandataire (60a, 60a', 60b, 60b'), en particulier une liaison point à point entre le deuxième élément de visualisation (58a, 58a', 58b, 58b') et le deuxième élément mandataire (60a, 60a', 60b, 60b').

3. Unité de visualisation (48) selon l'une quelconque des revendications précédentes, dans laquelle l'interface utilisateur (52) est adaptée pour recevoir des données d'entrée utilisateur se rapportant à la première variable et/ou à la deuxième variable, et pour fournir les données d'entrée utilisateur au premier élément mandataire (60a, 60a', 60b, 60b') et/ou au deuxième élément mandataire (60a, 60a', 60b, 60b'), respectivement.

4. Unité de visualisation (48) selon l'une quelconque des revendications précédentes, dans laquelle l'unité de visualisation (48), en particulier le premier élément de visualisation (58a, 58a', 58b, 58b'), est adaptée pour requêter du premier élément mandataire (60a, 60a', 60b, 60b') la première valeur.

5. Unité de contrôleur industriel (28), comprenant :
un premier élément mandataire (60a, 60a', 60b, 60b') qui est associé à un premier élément de visualisation correspondant (58a, 58a', 58b, 58b') fourni dans une unité de visualisation (48) selon la revendication 1,
dans laquelle l'unité de contrôleur industriel (28) est située à distance de l'unité de visualisation (48) dans un environnement de contrôle industriel (10) et est adaptée pour exécuter un programme de contrôle industriel ;
dans laquelle le premier élément mandataire (60a, 60a', 60b, 60b') agit comme représentant du premier élément de visualisation (58a, 58a', 58b, 58b') dans l'unité de contrôleur industriel (28) ; et
dans laquelle le premier élément mandataire (60a, 60a', 60b, 60b') est adapté pour fournir au moins une première valeur d'une première variable se rapportant au programme de contrôle industriel au premier élément de visualisation correspondant (58a, 58a', 58b, 58b') via une première liaison de données ; et
un second élément mandataire (60a, 60a', 60b, 60b') qui est associé à un second élément de visualisation correspondant (58a, 58a', 58b, 58b') fourni dans l'unité de visualisation (48), dans laquelle le second élément mandataire (60a, 60a', 60b, 60b') est différent du premier élément mandataire (60a, 60a', 60b, 60b') et dans laquelle le second élément de visualisation (58a, 58a', 58b, 58b') est différent du premier élément de visualisation (58a, 58a', 58b, 58b') ;
dans laquelle le second élément mandataire (60a, 60a', 60b, 60b') agit comme représentant du second élément de visualisation (58a, 58a', 58b, 58b') dans l'unité de contrôleur industriel (28) ; et
dans laquelle le second élément mandataire (60a, 60a', 60b, 60b') est adapté pour fournir au moins une deuxième valeur d'une deuxième variable se rapportant au programme de contrôle industriel au second élément de visualisation correspondant (58a, 58a', 58b, 58b') via une deuxième liaison de données.

6. Unité de contrôleur industriel (28) selon la revendication 5, comprenant en outre un élément de mémoire (34) adapté pour stocker la première variable et/ou la deuxième variable, dans laquelle le premier élément mandataire (60a, 60a', 60b, 60b') est adapté pour requêter la première variable de l'élément de mémoire (34) et/ou dans laquelle le second élément mandataire (60a, 60a', 60b, 60b') est adapté pour requêter la deuxième variable de l'élément de mémoire (34), en particulier conformément à une tâche de requête.

7. Unité de contrôleur industriel (28) selon la revendication 5 ou 6, dans laquelle le premier élément mandataire (60a, 60a', 60b, 60b') est adapté pour fournir la première valeur au premier élément de visualisation (58a, 58a', 58b, 58b') en réponse à une requête reçue de l'unité de visualisation (48), en particulier du premier élément de visualisation (58a, 58a', 58b, 58b').

8. Unité de contrôleur industriel (26) selon l'une quelconque des revendications 5 à 7, dans laquelle le premier élément mandataire (60a, 60a', 60b, 60b') est adapté pour recevoir des données d'entrée utilisateur de l'unité de visualisation (48), en particulier du premier élément de visualisation (58a, 58a', 58b, 58b'), et pour modifier la première variable conformément aux données d'entrée utilisateur.

9. Système (62) comprenant une unité de visualisation (48) selon l'une quelconque des revendications 1 à 4 et une unité de contrôleur industriel (28) selon l'une quelconque des revendications 5 à 8.

10. Procédé de connexion de données dans un environnement de contrôle industriel (10), comprenant :
l'association d'un premier élément de visualisation (58a, 58a', 58b, 58b') à un premier élément mandataire correspondant (60a, 60a', 60b, 60b') prévu dans une unité de contrôleur industriel (28), dans lequel l'unité de contrôleur industriel (28) est située à distance du premier élément de visualisation (58a, 58a', 58b, 58b') dans l'environnement de contrôle industriel (10) et est adaptée pour exécuter un programme de contrôle industriel, et dans lequel le premier élément mandataire (60a, 60a', 60b, 60b') agit comme représentant du premier élément de visualisation (58a, 58a', 58b, 58b') dans l'unité de contrôleur industriel (28) ;
l'association d'un deuxième élément de visualisation (58a, 58a', 58b, 58b') à un deuxième élément mandataire correspondant (60a, 60a', 60b, 60b') prévu dans l'unité de contrôleur industriel (28) ; dans lequel le deuxième élément de visualisation (58a, 58a', 58b, 58b') est situé à distance de l'unité de contrôleur industriel (28) dans l'environnement de contrôle industriel (10) et est différent du premier élément de visualisation (58a, 58a', 58b, 58b'), et dans lequel le deuxième élément mandataire (60a, 60a', 60b, 60b') est différent du premier élément mandataire (60a, 60a', 60b, 60b'), et dans lequel le deuxième élément mandataire (60a, 60a', 60b, 60b') agit comme représentant du deuxième élément de visualisation (58a, 58a', 58b, 58b') dans l'unité de contrôleur industriel (28) ;
la réception, par le premier élément de visualisation (58a, 58a', 58b, 58b'), d'au moins une première valeur d'une première variable se rapportant au programme de contrôle industriel du premier élément mandataire correspondant (60a, 60a', 60b, 60b') via une première liaison de données ;
la réception, par le deuxième élément de visualisation (58a, 58a', 58b, 58b'), d'au moins une deuxième valeur d'une deuxième variable se rapportant au programme de contrôle industriel du deuxième élément mandataire correspondant (60a, 60a', 60b, 60b') via une deuxième liaison de données ; et
l'affichage d'une représentation de la première valeur et/ou de la deuxième valeur.

11. Procédé selon la revendication 10, comprenant en outre :
la réception de données d'entrée utilisateur se rapportant à la première variable et/ou à la deuxième variable ; et
la délivrance des données d'entrée utilisateur au premier élément mandataire (60a, 60a', 60b, 60b') et/ou au deuxième élément mandataire (60a, 60a', 60b, 60b'), respectivement.

12. Procédé selon la revendication 10 ou 11, comprenant en outre :
la requête de la première valeur du premier élément mandataire (60a, 60a', 60b, 60b'), en particulier par l'intermédiaire du premier élément de visualisation (58a, 58a', 58b, 58b') ; et/ou
la requête de la deuxième valeur du deuxième élément mandataire (60a, 60a', 60b, 60b'), en particulier par l'intermédiaire du deuxième élément de visualisation (58a, 58a', 58b, 58b').

13. Procédé de connexion de données dans un environnement de contrôle industriel (10), comprenant :
l'association d'un premier élément mandataire (60a, 60a', 60b, 60b') à un premier élément de visualisation correspondant (58a, 58a', 58b, 58b'), dans lequel le premier élément mandataire (60a, 60a', 60b, 60b') est prévu dans une unité de contrôleur industriel (28) qui est située à distance du premier élément de visualisation (58a, 58a', 58b, 58b') dans l'environnement de contrôle industriel (10) et est adaptée pour exécuter un programme de contrôle industriel, et dans lequel le premier élément mandataire (60a, 60a', 60b, 60b') agit comme représentant du premier élément de visualisation (58a, 58a', 58b, 58b') dans l'unité de contrôleur industriel (28) ;
l'association d'un deuxième élément mandataire (60a, 60a', 60b, 60b') à un deuxième élément de visualisation correspondant (58a, 58a', 58b, 58b'), dans lequel le deuxième élément mandataire (60a, 60a', 60b, 60b') est prévu dans l'unité de contrôleur industriel (28), dans lequel le deuxième élément mandataire (60a, 60a', 60b, 60b') est différent du premier élément mandataire (60a, 60a', 60b, 60b') et dans lequel le deuxième élément de visualisation (58a, 58a', 58b, 58b') est différent du premier élément de visualisation (58a, 58a', 58b, 58b'), et dans lequel le deuxième élément mandataire (60a, 60a', 60b, 60b') agit comme représentant du deuxième élément de visualisation (58a, 58a', 58b, 58b') dans l'unité de contrôleur industriel (28) ;
la délivrance d'au moins une première valeur d'une première variable se rapportant au programme de contrôle industriel du premier élément mandataire (60a, 60a', 60b, 60b') au premier élément de visualisation correspondant (58a, 58a', 58b, 58b') via une première liaison de données ; et
la délivrance d'au moins une deuxième valeur d'une deuxième variable se rapportant au programme de contrôle industriel du deuxième élément mandataire (60a, 60a', 60b, 60b') au deuxième élément de visualisation correspondant (58a, 58a', 58b, 58b') via une deuxième liaison de données.

14. Procédé selon la revendication 13, comprenant en outre :
la requête, par le premier élément mandataire (60a, 60a', 60b, 60b'), de la première variable d'un élément de mémoire (34) de l'unité de contrôleur industriel (28), en particulier conformément à une tâche de requête.

15. Programme informatique comprenant des instructions lisibles par ordinateur, de sorte que les instructions, lorsqu'elles sont lues sur un ordinateur, soient adaptées pour mettre en œuvre un procédé selon l'une quelconque des revendications 10 à 14.
